# EUROPEAN PATENT SPECIFICATION

(11) **EP 1 658 175 B1**
(45) Date of publication and mention of the grant of the patent: **07.10.2009**
(21) Application number: 04769179.5
(22) Date of filing: 26.08.2004
(51) Int. Cl.: B32B 27/32, B65D 65/40

(54) **NON-FOIL BARRIER LAMINATES**
SPERRLAMINATE OHNE FOLIE
LAMINES NON-PELLICULAIRES FORMANT BARRIERE

(30) Priority: 26.08.2003 US 647955
(43) Date of publication of application: 24.05.2006
(73) Proprietor: Evergreen Packaging International B.V., 1043 EJ Amsterdam (NL)
(72) Inventor: REIGHARD, Tricia, Susan, Loveland, OH 45140 (US); BUSHMAN, Alexander, Craig, Loveland, OH 45140 (US); MARCHMAN, James, Irvin, Cincinnati, OH 45140 (US)
(74) Representative: Schneider, Michael
(86) International application number: PCT/IB2004/002755
(87) International publication number: WO 2005/018932

(56) References cited:
- EP-A- 0 352 127
- WO-A-95/03939
- WO-A-03/093009

## Description

### Related Applications

This application relates to Serial No. 10/288,841 which is a continuation-in-part of application Serial No. 10/105,713 filed March 25, 2002.

### Field of the Invention

The present invention relates to paperboard laminates and more particularly to non-foil paperboard laminates useful for making containers for products such as fruit and citrus juices and other beverages, as well as non-liquid dry products, wherein the laminate has good barrier characteristics including the ability to prevent the transmission of oxygen which leads to the loss of Vitamin C, aroma/flavor components and other ingredients of fruit and citrus juices and other beverages packaged therein. The laminates also are effective in minimizing microbial growth by virtue of their reduced permeability to oxygen. More particularly, this invention relates to such non-foil barrier laminates intended for making containers known in the trade as "gable top" containers or other cartons to be used for products that are conventionally hot filled such as fruit juices or punches. Such filled cartons are stored at ambient conditions for a shelf life of 3-6 months before product quality is compromised.

### Background of the Invention

Paperboard coated with low-density polyethylene (LDPE) has been used to make beverage containers, but falls short in providing an acceptable container for some products such as fruit juices. In particular, paperboard coated with LDPE has a relatively high permeability to oxygen which may lead to loss of flavor components and vitamins through oxidation during storage. Flavor loss can also occur as a result of migration or uptake of flavor components into the LDPE layer, a process referred to as "scalping."

The oxidative loss of vitamins and in particular Vitamin C can be substantially reduced by the use of a laminate containing a metal foil as an oxygen barrier liner along the interior of the container. However, the economics involved in using a metal foil often require a price premium that limits profitability. Further, metal foil laminates are prone to develop pin holes, seriously affecting their ability to contain liquids. A search for economical alternatives to foil has resulted in the development of laminate structures utilizing coextruded polymer materials such as polyethylene terephthalate (PET), polyvinyl chlorides, polyvinylidene chloride (PVdC) and ethylene vinyl alcohol copolymer (EVOH) as the barrier material and in particular EVOH (to provide protection against the transfer of oxygen and aid in retention of ascorbic acid and d-limonene in citrus juice).

WO 95/03939 A discloses a multi-layer structure comprising a paperboard substrate, a layer of a polyolefin applied onto a surface and an oxygen barrier layer comprising EVOH.

In addition to being less expensive than foil-containing structures, paperboard laminates containing such barrier materials may exhibit superior flavor retention properties due to the use of lower levels of LDPE as the product contact layer. Many conventional commercial structures for a paperboard carton for juice, punch and similar products now utilize a laminate containing ethylene vinyl alcohol copolymer as a barrier to oxygen and to prevent flavor and vitamin loss.

Nylon has also been proposed and used commercially as a barrier polymer in a paperboard container. It has been found not only to provide an effective barrier to oxygen but also to provide thermal resistance, mechanical strength and durability. As such, it serves as an abuse-resistant layer in the construction of laminates.

In order to ensure adequate or extended shelf life during storage, distribution and retail display under high as well as low humidity conditions, i.e., to provide a laminate with good oxygen barrier properties at relatively high humidity where EVOH is especially susceptible to degradation in barrier properties as a result of the presence of moisture, the combination of nylon and EVOH has been proposed as nylon has good barrier properties even at higher humidity conditions. Whereas nylon alone offers unacceptable barrier properties, the combination with EVOH achieves improved barrier properties of the laminates.

As can be appreciated, considerable effort has been devoted to finding the best layer structure in a barrier laminate for a juice, punch or other beverage carton. Thus other laminate structures utilizing coextruded polymer material such as polypropylene, polyethylene terephthalates, polyvinyl chlorides, polyvinylidene chloride, ethylene vinyl alcohol, and other polymeric materials as the barrier material to provide protection against the transfer of oxygen have also been proposed.

It is an object of the present invention to provide an improved, heat-sealable laminate material for a beverage carton which does not transmit flavor/odor ingredients of citrus and other juices and punches, exhibits a substantial oxygen barrier, decreases substantially the loss of Vitamin C, flavor, and aroma, minimizes microbial growth, has performance equal to or better than that of conventionally-used polymer barrier laminates, and reduces or eliminates manufacturing difficulties without detrimental economics.

It is a further object of the present invention to provide a beverage carton constructed of a laminate effective to prevent the intrusion of oxygen into the carton and therewith the oxygen degradation of flavor and vitamin components, particularly Vitamin C, and the migration, i.e., scalping, of flavor and aroma ingredients of the beverage.

Another object of the invention is to provide a heat-sealable laminate having a low oxygen permeability during filling over a range of temperatures (cold fill to hot fill), at both room temperature and refrigerated storage conditions and under both low and high humidity conditions.

### Summary of the Invention

In accordance with one embodiment of the present invention, improved heat-sealable non-foil laminates for fruit or citrus juices, punches, other beverages and the like providing an effective barrier to the intrusion of oxygen and migration of flavors and for retention of Vitamin C, flavors and aromas are provided which comprise from the paperboard surface to the inner surface which contacts the contents of the carton fabricated from the laminate, a paperboard substrate having an interior and exterior surface, a first layer of polyolefin coated on the exterior surface of the substrate, a first polyamide layer applied onto the interior surface of the substrate, a first oxygen barrier layer of EVOH applied directly onto the first polyamide layer, a second polyamide layer applied directly onto said first EVOH layer, a first tie layer applied directly onto the polyamide layer, a second oxygen barrier layer of EVOH applied directly onto the first tie layer, a second tie layer applied directly onto the second EVOH layer, and an innermost layer of polyolefin that will contact the contents of the container.

In another embodiment of the invention, a laminate structure for paperboard cartons or containers having the properties just described comprises paperboard which is coated with an outer layer of polyolefin, a first polyamide layer provided onto the inner surface of the paperboard, a first layer of EVOH applied directly onto the first polyamide layer, a second polyamide layer applied directly onto the first EVOH layer, a first tie layer applied directly onto the second polyamide layer, a layer of polyolefin coated onto the first tie layer, a second tie layer applied onto the polyolefin layer, a second EVOH layer coated onto the second tie layer, a third tie layer applied directly onto the second EVOH layer and an innermost layer of polyolefin applied directly onto the third tie layer, the innermost layer of polyolefin serving as the contact layer with the contents of the carton. The ultimate structure of this embodiment in essentially the same as that of the embodiment described above, but an extra tie and olefin layer are included between the second polyamide and second EVOH layer.

The polyamide layers provide strength, heat resistance and mechanical toughness around the first EVOH oxygen barrier layer during conversion of the laminate into the carton and during use. The second EVOH layer which is incorporated into the laminate closer to the juice, punch or other beverage product contact surface, enhances the overall oxygen barrier properties while limiting flavor and aroma migration or scalping.

Cartons can be constructed easily from the laminates of the present invention and provide excellent gas-barrier protection for liquid and dry products and significant flavor retention and prevention of loss of Vitamin C from the juices and punches contained therein, resulting in extended shelf life for such products. Moreover, carton blanks prepared from laminates of the present invention exhibit better runnability on equipment used for folding carton blanks compared to carton blanks comprising laminates having a foil barrier layer, thereby further facilitating the manufacturing process.

### Brief Description of the Drawings

**Fig. 1** is a schematic cross-sectional illustration showing a barrier-board laminate according to the invention.
**Fig. 2** is a schematic cross-sectional illustration showing another form of barrier-board laminate according to the invention.
**Fig. 3** is a graphic representation of % vitamin C retained vs. days after filling for cartons that were cold filled with orange juice and stored at 38°F for 64 days.
**Fig. 4** is a graphic representation of % vitamin C retained vs. days after filling for cartons that were cold filled with orange juice and stored at 73°F for 64 days.

### Detailed Description

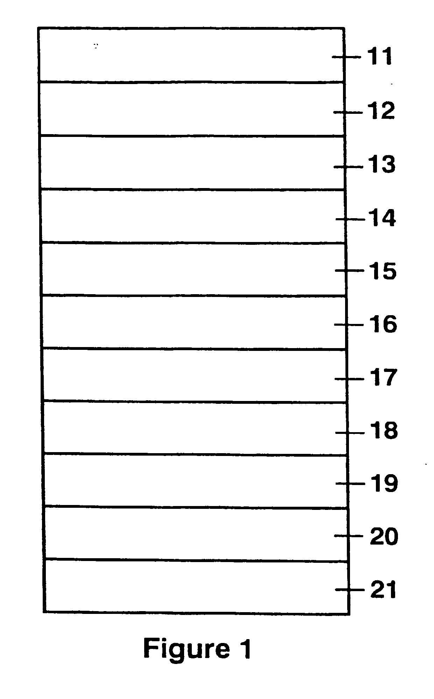

The laminate in **Fig. 1** comprises a carrier layer or substrate **12** of paperboard (100-300 lbs.*) onto which there is applied on one side an extrusion coating of polyolefin polymer layer **11** such as LDPE, HDPE, LLDPE, metallocene or the like, preferably LDPE, at a coating weight of 9-20 lbs. and preferably about 12-15 lbs. to provide the outer surface of the laminate. Layer 11 is the outer "gloss" layer.

On the interior side of the substrate **12,** there is applied a first polyamide layer **13** at a coating weight of 1-15 lbs. and preferably about 5-10 lbs. The polyamide layer can be but is not limited to nylon 6, nylon 66, nylon 10, nylon 6-10, nylon 12, amorphous nylons, MXD-6, nylon nanocomposites and other suitable polyamides. Onto the interior surface of the polyamide layer **13,** there is applied a first oxygen barrier layer
lbs./ream (Ream size = 3,000 sq. feet) of EVOH copolymer **14** having a coating weight of 1-10 lbs. and preferably 3-6 lbs. The EVOH copolymer may contain 26-44 mole % ethylene. Layer 14 can also be, but is not limited to, oxygen scavenging EVOH materials, EVOH nanocomposites, or blends of EVOH with polyolefins such as low density polyethylene. Layer **15** is a second layer of polyamide and is applied in an amount of 1-15 lbs. preferably about 5-10 lbs. to the underside of the first EVOH layer. All of the materials listed for layer **13** may also be used in layer **15.**

A tie layer **16** is applied onto the inner side of the second polyamide layer **15** in an amount of 1-15 lbs. preferably 5-10 lbs. The tie layer is preferably based on, but is not limited to, ethylene based copolymers modified with maleic anhydride functional groups such as Plexar and Bynel, but can also include other common tie resins such as Nucrel, Primacor and Surlyn. Plexar 5125 is a preferred tie material. There is thereafter applied to the underside of the tie layer **16,** a layer of polyolefin **17.** The polyolefin **17** is applied in an amount of 1- 20 lbs., preferably about 4-10 lbs. The polyolefin is preferably polyethylene and most preferably a low density polyethylene. A second tie layer **18** is applied in an amount of 1-15 lbs. onto the underside of the polyolefin layer **17.** A second oxygen barrier layer of EVOH **19** in an amount of 1-10 lbs. and preferably about 3-6 lbs. is applied onto the second tie layer **18.** Layer **19** can be, but is not limited to, ethylene vinyl alcohol copolymers (containing 26-44 mole % ethylene), oxygen scavenging EVOH materials, EVOH nanocomposites, EVOH combined with inorganic fillers (such as talc or kaolin), or blends of EVOH with other polymers (such that EVOH remains the continuous phase); polyvinyl alcohols (PVOH); polyamides such as, but not limited to, nylon 6, nylon 66, nylon 6/9, nylon 10, nylon 6-10, nylon 11, nylon 12, amorphous nylons, MXD-6, nylon nanocomposites, nylon combined with inorganic fillers (such as talc or kaolin), and blends of nylon with other polymers (such that the nylon remains the continuous phase); polyethylene terephthalates including glycol-modified polyethylene terephthalates, acid-modified polyethylene terephthalates, PET nanocomposites, PET combined with other inorganic fillers (such as talc or kaolin), and blends of PET with other polymers (such that the PET remains the continuous phase); PEN; vinylidene chloride copolymer; polyvinyl copolymers, and blends thereof; polycarbonates; and liquid crystal polymers. In addition, desiccants, molecular sieves, and the like may be added to layer **19** to improve water vapor barrier characteristics of the layer; and molecular sieves, cyclodextrins, and the like may be added to same layer for improved flavor/aroma barrier. A third tie layer **20** in an amount of 1-5 lbs. is included between the second EVOH layer **19** and the innermost layer of polyolefin **21** which is applied in an amount of 1- 20 lbs. and preferably about 4-10 lbs. The polyolefin layers **17** and **21** can be, but are not limited to, low density polyethylene, linear low density polyethylene, high density polyethylene, polypropylene, cyclic olefin copolymers, and blends thereof.

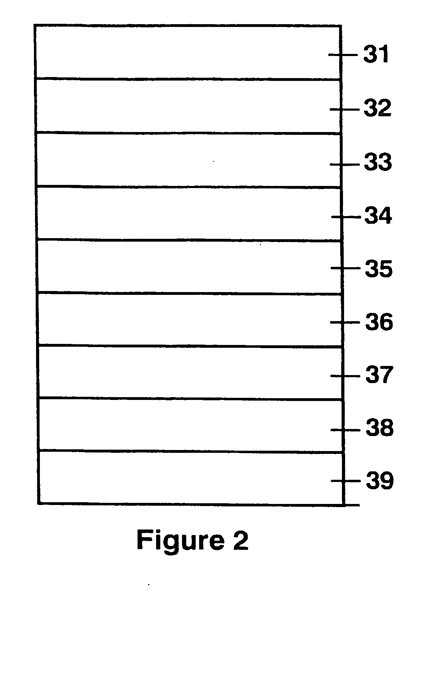

Looking at **Fig. 2****,** another embodiment of the invention, the structure has a paperboard substrate **32** (100-300 lbs.) onto one side of which a coating of polyolefin **31** such as LDPE, HDPE, LLDPE, metallocene, or a blend thereof is applied in an amount of 9-20 lbs. and preferably about 12 lbs. Layer **31** is the "gloss" layer which contacts the atmosphere. A layer **33** of polyamide in a coating weight of between 1-15 lbs. and preferably about 5-10 lbs. is applied onto the underside or interior portion of the substrate **32.** The polyamide layer can be but is not limited to nylon 6, nylon 66, nylon 10, nylon 6-10, nylon 12, amorphous nylons, MXD-6, nylon nanocomposites and other suitable polyamides. The underside or the interior of the polyamide layer **33** has an EVOH layer **34** coated thereon of thickness 1-10 lbs. and preferably about 3-6 lbs. The EVOH layer can be but is not limited to EVOH containing 26-44 mole % ethylene, EVOH nanocomposites, oxygen scavenging EVOH, or blends of EVOH with polyolefins such as low density polyethylene. The EVOH layer **34** has another or second polyamide layer **35** on its underside or interior, which has a coating weight of between 1-15 lbs. and preferably about 5-10 lbs. All of the materials listed for layer **33** may also be used in layer **35.** A first tie layer **36** having a coating weight of 1-10 lbs., preferably about 4-7 lbs., is disposed on the underside of the polyamide layer **35.** A second EVOH layer **37** is applied onto the underside of the first tie layer **36** and has a coating weight of between 1-10 lbs., preferably 3-6 lbs. The second EVOH layer can be, but is not limited to, ethylene vinyl alcohol copolymers (containing 26-44 mole % ethylene), oxygen scavenging EVOH materials, EVOH nanocomposites, EVOH combined with inorganic fillers (such as talc or kaolin), or blends of EVOH with other polymers (such that EVOH remains the continuous phase); or blends of polyvinyl alcohols (PVOH); polyamides such as, but not limited to, nylon 6, nylon 66, nylon 6/9, nylon 10, nylon 6-10, nylon 11, nylon 12, amorphous nylons, MXD-6, nylon nanocomposites, nylon combined with inorganic fillers (such as talc or kaolin), and blends of nylon with other polymers (such that the nylon remains the continuous phase); polyethylene terephthalates including glycol-modified polyethylene terephthalates, acid-modified polyethylene terephthalates, PET nanocomposites, PET combined with other inorganic fillers (such as talc or kaolin), and blends of PET with other polymers (such that the PET remains the continuous phase); polyethylene naphthalate PEN; vinylidene chloride copolymer; polyvinyl chloride polymers; polyolefins including, but not limited to, low density polyethylene, high density polyethylene, linear low density polyethylene, polypropylene, cyclic olefin copolymers, and blends thereof; polycarbonates; and liquid crystal polymers. In addition, desiccants, molecular sieves, and the like may be added to layer **37** to improve water vapor barrier characteristics of the layer; and molecular sieves, cyclodextrins, and the like may be added to same layer for improved flavor/aroma barrier. The second EVOH layer **37** has another or second tie layer **38** on its underside or interior, which has a coating weight of between 1-10 lbs. and is preferably about 4-7 lbs. Finally, a layer of polyolefin polymer **39** such as low density polyethylene, linear low density polyethylene, high density polyethylene, polypropylene, cyclic olefin copolymers, or a blend thereof, is disposed on the product side on the underside of the second tie layer **38.** The product side polyolefin layer **39** has a coating weight of between 1-40 lbs. and preferably 8-22 lbs.

The embodiment of **Fig.1** can be prepared as follows. First a layer of polyolefin **11** is extrusion coated on the outer surface of the substrate **12.** There is then coextruded onto the inner surface of the substrate a four-layer sandwich of polyamide **13**/EVOH **14**/polyamide **15**/tie **16**. A five-layer sandwich of polyolefin 17/tie 18/EVOH 19/ tie 20/polyolefin 21 is coextruded onto the inner surface of the four-layer sandwich.

In the second embodiment of the invention shown in **Fig. 2****,** a layer of polyolefin **31** is extrusion coated onto the paperboard substrate **32** to provide the outer surface of the laminate. A three-layer sandwich of polyamide **33**/EVOH **34**/polyamide **35** is coextruded directly onto the inner surface of the paperboard substrate **32.** A three-layer sandwich of EVOH **37** surrounded by two tie layers **36** and **38** is coextruded onto the polyamide layer **35** of the polyamide/EVOH/polyamide coextrusion. Finally, a product contact layer **39** of polyolefin is extruded onto the inner surface of tie layer **38** of that coextrusion.

Olefin polymers suitable for use in the present invention are heat-sealable and include polypropylene, high density polyethylene, medium density polyethylene, low density polyethylene, and linear low density polyethylene and combinations thereof. Most preferred is low density polyethylene. Any commercial extrusion coating grade polyolefin is suitable for use herein. The olefin polymers may include additives to provide desired flow, adhesion or heat-sealing characteristics.

Paperboard for use in the present invention includes suitably high grade paperboard stock, for example, milk carton stock. The board may have a basis weight of about 100 to 300 lbs./ream, preferably 150 to about 200lbs./ream. Either or both paperboard surfaces can be flame or corona treated and/or primed to facilitate adhesion of subsequent polymer layers. Primers which may be used include polyethylene imine (PEI) or ethylene vinyl acetate.

The nylon used in the present invention should be suitable for coextrusion coating onto the paperboard substrate. Examples of nylons for use herein include polyamides or copolyamides such as nylon 6, nylon 6,12 (the polycondensation product of hexamethylene diamine and a 12-carbon dibasic acid); nylon 12 (the polymerization product of lauric lactam or cyclododecalactam, with 11 methylene units between the linking -NH-CO- groups in the polymer chain); nylon **11** (the polycondensation product of the monomer 11-aminoundecanoic acid);; nylon 6,10 (polyhexamethylene sebacamide) and amorphous nylons.

Tie layer resins suitable for coextruding with the nylon in accordance with the invention include resins which have good adhesion to both nylons and polyolefins. Preferred tie layer resins having suitable adhesion properties include anhydride-modified copolymers, especially anhydride modified ethylene copolymers. Most preferred are anhydride modified linear low/low density ethylene copolymers. An anhydride modified linear low/low density ethylene copolymer particularly suitable for use as the tie layer material in the present invention is Bynel E388 available from the duPont Corporation of America. Another duPont product, an anhydride modified ethylene acetate copolymer (Bynel E369) may also be used as the tie layer material. Other suitable tie layer materials are those described in U.S. Pat. Nos. 4,087,587 and 4,087,588, both of which are incorporated herein by reference. Materials of the type described therein are sold under the trade name Plexar.

The laminate of the invention produces an extended long life, low oxygen permeable, leak free container laminate structure such as a paperboard based package or carton that prevents the transmission of gases, in particular oxygen, therethrough, and in addition, prevents the escape of flavor components, or the ingress of microbiological contaminates and further produces such a package that is economical on a per-package cost basis, is fundamentally compatible with existing converting machinery, and can be formed, cold or hot filled, and sealed at economically high speeds using conventional packaging machine temperatures, pressures and dwell times.

The following example is provided for further illustration of the invention.

### Example 1:

A non-foil barrier laminate consistent with the structure shown in **Fig. 1** was produced using 5 lbs/ream nylon 6 in layer **13,** 6 lbs/ream EVOH in layer **14,** 5 lbs/ream nylon 6 in layer **15,** and 3 lbs/ream EVOH in layer **19.** The laminate was compared to a laminate (Comparison Sample 1) as defined in **Fig. 1** of application Serial No.10/288,841 of which the instant application is a continuation in part comprising a paperboard substrate onto which there is applied a layer of low density polyethylene to provide the outer surface of the laminate, a polyamide polymer applied onto the interior surface of the substrate, a layer of ethylene vinyl alcohol copolymer applied to the underside of the polyamide polymer layer, a first tie layer applied to the underside of the ethylene vinyl alcohol copolymer layer, a polyolefin layer applied to the underside of the first tie layer, a second tie layer applied onto the polyolefin layer, a second layer of ethylene vinyl alcohol copolymer applied to the underside of the second tie layer, a third tie layer is applied to the underside of the second ethylene vinyl alcohol copolymer layer, followed by a polyolefin polymer layer forming the product contact surface and a laminate (Comparison Sample 2) described in Kinsey US Pat. No. 6,110,548 comprising a paperboard substrate having an outer layer of low density polyethylene, a layer of polyamide on the interior side of the substrate, a tie layer applied on the underside of the polyamide layer, a first polyolefin polymer layer applied to the underside of the tie layer, a second polyolefin polymer layer on the underside of the first polyolefin polymer layer, a second tie layer disposed on the underside of the second polyolefin polymer layer, an ethylene vinyl alcohol copolymer layer disposed on the interior of the second tie layer, a third tie layer applied on the underside of the ethylene vinyl alcohol copolymer layer and a final layer of polyolefin polymer disposed on the underside of the third tie layer.

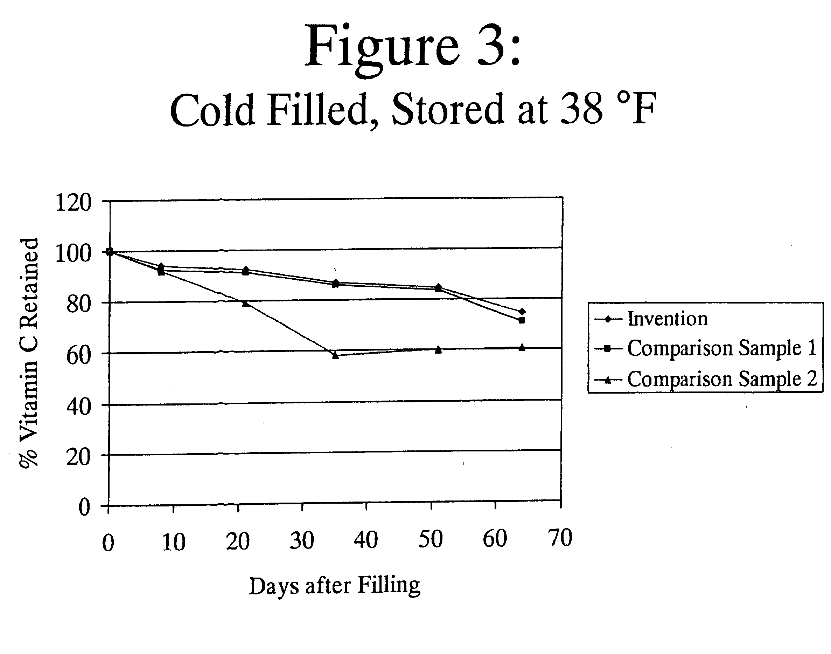

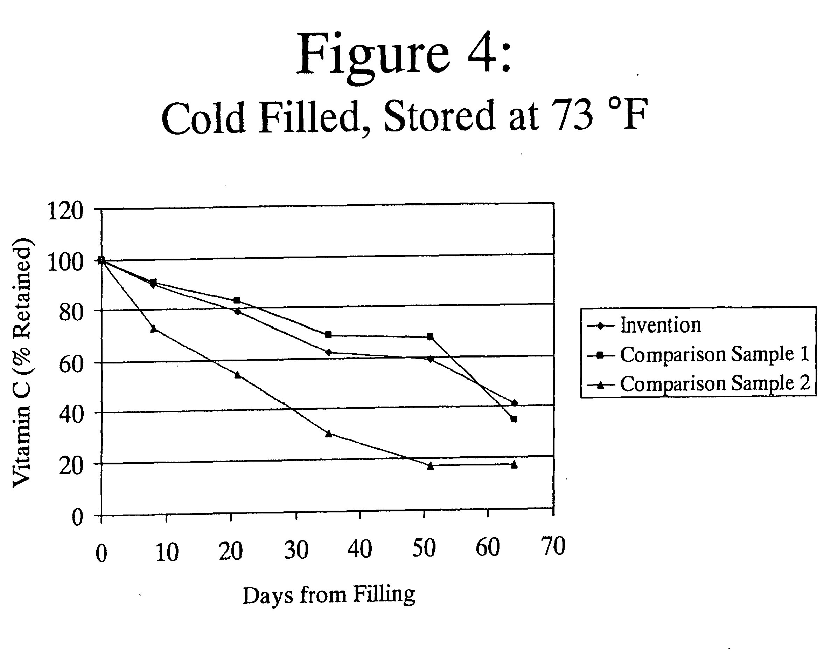

The skived liter gable top cartons were cold filled with fresh, not-from-concentrate orange juice and stored at refrigerated (38 °F) and ambient (73 °F) temperatures across a 64 day shelf life test. Vitamin C content of the juice was measured during filling and subsequently at days 8, 21, 35, 51, and 64 after filling. Results for refrigerated and ambient storage are shown in **Fig. 3** and **4****,** respectively. The packaging material of the present invention performs comparably to the Comparison Sample 1 material and better than the Comparison Sample 2 structure at both storage conditions.

## Claims

1. A barrier laminate comprising
a) a paperboard substrate having a first surface and a second surface, the second surface being opposite the first surface,
b) a layer of polyolefin applied directly onto the second surface of the paperboard substrate,
c) a first polyamide layer applied directly on the first surface of the paperboard substrate,
d) a first oxygen barrier layer of EVOH applied directly onto the first polyamide layer,
e) a second polyamide layer applied directly onto the first oxygen barrier layer of EVOH,
f) a first tie layer applied directly on the second polyamide layer,
g) a second oxygen barrier layer selected from the group consisting of EVOH, polyvinyl alcohols, polyamides, polyesters, polyethylene terphthalates, polyolefins, cyclic olefin copolymers, polycarbonates, liquid crystalline polymers and blends thereof and blends of any of the foregoing group members with at least one member selected from the group consisting of desiccants, molecular sieves and cyclodextrins applied directly on said first tie layer,
h) a second tie layer applied directly on said second oxygen barrier layer, and
i) a polyolefin layer applied onto said second tie layer as the innermost and product contact layer.

2. A barrier laminate according to claim 1 wherein said polyolefin layer applied onto the second surface of the paperboard substrate is polyethylene.

3. A barrier laminate according to claim 1 wherein said polyolefin applied onto the second tie layer and forming the product contact layer is polyethylene.

4. A barrier laminate according to claim 1 wherein said first and second polyamide layers each comprise a member selected from the group consisting of nylon 6, nylon 66, nylon 10, nylon 6-10, nylon 11, nylon 12, amorphous nylons, MXD-6 and nylon nanocomposites.

5. A barrier laminate according to claim 1 wherein the second oxygen barrier layer is EVOH.

6. A barrier laminate according to claim 1 wherein the tie layers are each an ethylene based copolymer modified with maleic anhydride functional groups.

7. A barrier laminate according to claim 6 wherein the tie layers are each Plexar.

8. A barrier laminate according to claim 5 wherein the EVOH contains 26-44 mol% ethylene.

9. A barrier laminate according to claim 1 wherein the second oxygen barrier layer is separated from the first tie layer by a layer of polyolefin coated directly on the first tie layer and a third tie layer coated directly on the polyolefin layer.

10. A barrier laminate according to claim 1 further comprising a layer of polyolefin applied directly onto said first tie layer, and a tie layer applied directly onto said polyolefin layer. that is applied directly onto said first tie layer,

11. A barrier laminate according to claim 10 wherein the second oxygen barrier layer comprises EVOH.

12. A method for extending the shelf life of a beverage including fruit and citrus juices stored in a paperboard container wherein said container is formed from a laminate according to claim 1.

13. A method for extending the shelf life of a beverage including fruit and citrus juices stored in a paperboard container wherein said container is formed from a laminate according to claim 10.

14. A sealed container and a perishable product contained therein, the container being constructed of a laminate according to claim 1 or 10, the product being hot filled into the container, said product having been heated to a temperature sufficient to kill essentially all of the micro organisms in the food product, sealing the container and cooling the product within the container to ensure that the product is shelf stable.

## Patentansprüche

1. Sperrlaminat, umfassend
a) einen Trägerkarton mit einer ersten Fläche und einer zweiten Fläche, wobei die zweite Fläche gegenüber der ersten Fläche liegt,
b) eine Schicht aus Polyolefin, die unmittelbar auf die zweite Fläche des Trägerkartons aufgetragen ist,
c) eine erste Polyamidschicht, die unmittelbar auf die erste Fläche des Trägerkartons aufgetragen ist,
d) eine erste Sauerstoffsperrschicht aus EVOH, die unmittelbar auf die erste Polyamidschicht aufgetragen ist,
e) eine zweite Polyamidschicht, die unmittelbar auf die erste Sauerstoffsperrschicht aus EVOH aufgetragen ist,
f) eine erste Haftvermittlerschicht, die unmittelbar auf die zweite Polyamidschicht aufgetragen ist,
g) eine zweite Sauerstoffsperrschicht, welche aus jener Gruppe ausgewählt ist, die besteht aus EVOH, Polyvinylalkoholen, Polyamiden, Polyestern, Polyethylenterephthalaten, Polyolefinen, Cyclo-Olefin-Copolymeren, Polycarbonaten, flüssigkristallinen Polymeren und Blends aus denselben sowie Blends aus jedem beliebigen der vorgenannten Gruppenteile mit zumindest einem Teil, der aus jener Gruppe ausgewählt ist, die aus Trocknungsmitteln, Molekularsieben und Cyclodextrinen besteht, und welche unmittelbar auf die erste Haftvermittlerschicht aufgetragen ist,
h) eine zweite Haftvermittlerschicht, die unmittelbar auf die zweite Sauerstoffsperrschicht aufgetragen ist, und
i) eine Polyolefinschicht, die auf die zweite Haftvermittlerschicht als die innerste und das Produkt berührende Schicht aufgetragen ist.

2. Sperrlaminat nach Anspruch 1, wobei die auf die zweite Fläche des Trägerkartons aufgetragene Polyolefinschicht Polyethylen ist.

3. Sperrlaminat nach Anspruch 1, wobei das Polyolefin, das auf die zweite Haftvermittlerschicht aufgetragen ist und die Produktberührungsschicht bildet, Polyethylen ist.

4. Sperrlaminat nach Anspruch 1, wobei die erste und zweite Polyamidschicht jeweils einen Teil umfassen, der aus jener Gruppe ausgewählt ist, die aus Nylon 6, Nylon 66, Nylon 10, Nylon 6-10, Nylon 11, Nylon 12, amorphen Nylons, MXD-6 und Nylon-Nanokompositen besteht.

5. Sperrlaminat nach Anspruch 1, wobei die zweite Sauerstoffsperrschicht EVOH ist.

6. Sperrlaminat nach Anspruch 1, wobei die Haftvermittlerschichten jeweils ein Ethylenbasiertes Copolymer sind, das mit Maleinsäureanhydrid als funktionellen Gruppen modifiziert ist.

7. Sperrlaminat nach Anspruch 6, wobei die Haftvermittlerschichten jeweils Plexar sind.

8. Sperrlaminat nach Anspruch 5, wobei der EVOH 26-44 Mol-% Ethylen enthält.

9. Sperrlaminat nach Anspruch 1, wobei die zweite Sauerstoffsperrschicht von der ersten Haftvermittlerschicht getrennt ist durch eine Schicht aus Polyolefin, die unmittelbar auf die erste Haftvermittlerschicht aufgetragen ist, und eine dritte Haftvermittlerschicht, die unmittelbar auf die Polyolefinschicht aufgetragen ist.

10. Sperrlaminat nach Anspruch 1, weiterhin umfassend
eine Schicht aus Polyolefin, die unmittelbar auf die erste Haftvermittlerschicht aufgetragen ist, und
eine Haftvermittlerschicht, die unmittelbar auf die Polyolefinschicht aufgetragen ist, die unmittelbar auf die erste Haftvermittlerschicht aufgetragen ist.

11. Sperrlaminat nach Anspruch 10, wobei die zweite Sauerstoffsperrschicht EVOH umfasst.

12. Verfahren zur Verlängerung der Haltbarkeit eines Getränks, einschließlich in einem Kartonbehälter aufbewahrter Frucht- und Zitrussäfte, wobei der Behälter aus einem Laminat nach Anspruch 1 geformt wird.

13. Verfahren zur Verlängerung der Haltbarkeit eines Getränks, einschließlich in einem Kartonbehälter aufbewahrter Frucht- und Zitrussäfte, wobei der Behälter aus einem Laminat nach Anspruch 10 geformt wird.

14. Versiegelter Behälter und darin enthaltenes verderbliches Produkt, wobei der Behälter aus einem Laminat nach Anspruch 1 oder 10 aufgebaut ist, wobei das Produkt in den Behälter heißabgefüllt wird, wobei das Produkt auf eine Temperatur erhitzt worden ist, die ausreicht, um im Wesentlichen alle der Mikroorganismen in dem Lebensmittelprodukt abzutöten, Versiegeln des Behälters und Kühlen des Produkts innerhalb des Behälters, um zu gewährleisten, dass das Produkt lagerstabil ist.

## Revendications

1. Stratifié formant barrière comprenant
a) un substrat de carton possédant une première surface et une seconde surface, la seconde surface étant au dos de la première surface,
b) une couche de polyoléfine directement appliquée sur la seconde surface du substrat de carton,
c) une première couche de polyamide directement appliquée sur la première surface du substrat de carton,
d) une première couche barrière contre l'oxygène composée d'EVOH directement appliquée sur la première couche de polyamide,
e) une seconde couche de polyamide directement appliquée sur la première couche barrière contre l'oxygène composée d'EVOH,
f) une première couche de liaison directement appliquée sur la seconde couche de polyamide,
g) une seconde couche barrière contre l'oxygène choisie dans le groupe constitué par l'EVOH, les alcools polyvinyliques, les polyamides, les polyesters, les téréphtalates de polyéthylène, les polyoléfines, les copolymères d'oléfines cycliques, les polycarbonates, les polymères cristallins liquides et leurs mélanges ainsi que les mélange de tout élément des groupes suscités avec au moins un élément choisi dans le groupe constitué par les siccatifs, les tamis moléculaires et les cyclodextrines, directement appliquée sur ladite première couche de liaison,
h) une deuxième couche de liaison directement appliquée sur ladite seconde couche barrière contre l'oxygène, et
i) une couche de polyoléfine appliquée sur ladite deuxième couche de liaison pour former la couche la plus intérieure et en contact avec le produit.

2. Stratifié formant barrière selon la revendication 1, dans lequel ladite couche de polyoléfine appliquée sur la seconde surface du substrat de carton est composée de polyéthylène.

3. Stratifié formant barrière selon la revendication 1, dans lequel ladite polyoléfine appliquée sur la deuxième couche de liaison et constituant la couche en contact avec le produit est le polyéthylène.

4. Stratifié formant barrière selon la revendication 1, dans lequel lesdites première et seconde couches de polyamide sont chacune constituées par un élément choisi dans le groupe constitué par le nylon 6, le nylon 66, le nylon 10, le nylon 6-10, le nylon 11, le nylon 12, les nylons amorphes, le MXD-6 et les nanocomposites de nylon.

5. Stratifié formant barrière selon la revendication 1, dans lequel la seconde couche barrière contre l'oxygène est composée d'EVOH.

6. Stratifié formant barrière selon la revendication 1, dans lequel les couches de liaison sont chacune constituées d'un copolymère à base d'éthylène modifié par des groupes fonctionnels anhydride maléique.

7. Stratifié formant barrière selon la revendication 6, dans lequel les couches de liaison sont chacune composées de Plexar.

8. Stratifié formant barrière selon la revendication 5, dans lequel l'EVOH contient de 26 à 44 % en moles d'éthylène.

9. Stratifié formant barrière selon la revendication 1, dans lequel la seconde couche barrière contre l'oxygène est séparée de la première couche de liaison par une couche de polyoléfine placée directement sur la première couche de liaison et une troisième couche de liaison placée directement sur la couche de polyoléfine.

10. Stratifié formant barrière selon la revendication 1, comprenant en outre une couche de polyoléfine directement appliquée sur ladite première couche de liaison, et une couche de liaison directement appliquée sur ladite couche de polyoléfine qui est directement appliquée sur ladite première couche de liaison.

11. Stratifié formant barrière selon la revendication 10, dans lequel la seconde couche barrière contre l'oxygène est constituée d'EVOH.

12. Procédé permettant d'allonger la durée de conservation d'une boisson, notamment de jus de fruits et d'agrumes, conditionnée dans un conteneur en carton, dans lequel ledit conteneur est réalisé à partir d'un stratifié selon la revendication 1.

13. Procédé permettant d'allonger la durée de conservation d'une boisson, notamment de jus de fruits et d'agrumes, conditionnée dans un conteneur en carton, dans lequel ledit conteneur est réalisé à partir d'un stratifié selon la revendication 10.

14. Conteneur hermétique renfermant un produit périssable, le conteneur étant réalisé à partir d'un stratifié selon la revendication 1 ou 10, le produit étant rempli à chaud dans le conteneur, ledit produit ayant été porté à une température suffisante pour éliminer essentiellement tous les micro-organismes présents dans le produit alimentaire, le conteneur étant hermétiquement fermé et le produit étant refroidi à l'intérieur du conteneur en vue d'assurer la stabilité et la bonne conservation du pr
